# EUROPÄISCHE PATENTANMELDUNG

(11) **EP 3 318 312 A1**
(43) Veröffentlichungstag der Anmeldung: **09.05.2018**
(21) Anmeldenummer: 16196906.8
(22) Anmeldetag: 02.11.2016
(51) Int. Cl.: B01D 46/06

(54) **STÜTZKORBANORDNUNG**

(71) Anmelder: Spies, Ralf, 52351 Düren (DE); Magifito Investments BV, 7559 SG Hengelo (NL)
(72) Erfinder: Van Hagen, Stefan, 7559 SG Hengelo (NL)
(74) Vertreter: Albrecht, Ralf

(57) **Zusammenfassung**

Die Erfindung betrifft eine Stützkorbanordnung, umfassend zumindest einen Stützkorb (4), welcher eine Mehrzahl von Längsstäben (5) und mehrere gleichartig ausgebildete, übereinanderliegende Ringelemente (6) aufweist, die in der Längsrichtung der Längsstäbe (5) voneinander beabstandet sind, wobei die Längsstäbe (5) entlang des Umfangs der Ringelemente (6) positioniert und an diesen befestigt sind, wobei die Außenseiten der Ringelemente (6) des Stützkorbs (4) jeweils eine rein elliptische Fläche, insbesondere ohne gerade Abschnitte, aufspannen.

## Beschreibung

Die Erfindung betrifft eine Stützkorbanordnung umfassend zumindest einen Stützkorb, welcher eine Mehrzahl von Längsstäben und mehrere gleichartig ausgebildete, übereinanderliegende Ringelemente aufweist, die in der Längsrichtung der Längsstäbe voneinander beabstandet sind, wobei die Längsstäbe entlang des Umfangs der Ringelemente positioniert und an diesen befestigt sind.

Zudem betrifft die Erfindung eine Filterschlauchanordnung umfassend eine solche Stützkorbanordnung und zumindest einen Filterschlauch, der auf den Stützkorb der Stützkorbanordnung aufgezogen ist.

Derartige Filterschlauchanordnungen sind aus dem Stand der Technik und hier insbesondere der DE 10 2005 041 521 B4 bekannt und werden insbesondere zur Reinigung der Rauchgase von fossilen Brennstoffen eingesetzt. Beispielsweise kommen sie in Kraftwerken, in Müllverbrennungsanlagen und technischen Anlagen zur Anwendung.

Solche Filterschlauchanordnungen umfassen Filterschläuche, die aus verschiedenen Materialien wie Polyester, Polyacrynitril, Aramid, Polyphenylensulfid (PPS), Polyimid, Polytetrafluorethylen (PTFE), Glas, genäht werden können. Um ein Einfallen der Filterschläuche aus textilem Material zu verhindern, sind sie zur Stabilisierung auf Stützkörbe aufgezogen. Diese bestehen in der Regel aus mehreren Längsstäben, die im Kreis angeordnet und durch mehrere in der Längsrichtung der Längsstäbe voneinander beabstandet angeordnete Ringelemente, an denen sie festgeschweißt sind, miteinander verbunden sind. Zudem können derartige Filterschlauchanordnungen eine Lochplatte umfassen, um die Filterschlauchanordnung in eine Reingasseite und eine Rohgasseite zu unterteilen. Die Filterschläuche sind in Öffnungen der Lochplatte angeordnet und so abgedichtet, dass kein staubbelastetes Gas von der Rohgasseite ungefiltert in die Reingasseite gelangen kann.

Die aus dem Stand der Technik bekannten Stützkorbanordnungen haben sich bewährt. Die Bestrebungen gehen jedoch dahin, die Filterleistung zu erhöhen / zu optimieren.

Ausgehend von diesem Stand der Technik ist es eine Aufgabe der vorliegenden Erfindung, eine Stützkorbanordnung und Filterschlauchanordnung der eingangs genannten Art anzugeben, bei denen die Filterleistung eines auf den Stützkorb aufgezogenen Filterschlauchs verbessert wird.

Diese Aufgabe wird bei einer Stützkorbanordnung und einer Filterschlauchanordnung der eingangs genannten Art dadurch gelöst, dass die Außenseiten der Ringelemente des Stützkorbs jeweils eine rein elliptische Fläche, insbesondere ohne gerade Abschnitte, aufspannen.

Der Erfindung liegt die Überlegung zugrunde, das Verhältnis zwischen Filterfläche und Volumen der Filteranlage zu optimieren, indem die Filterschläuche ellipsenförmig aufgespannt werden. Ein ellipsenförmiger Filterschlauch weist im Vergleich zu einem kreisförmigen Filterschlauch bei gleichem Innenvolumen eine größere Außenfläche auf. Durch die größere Filterfläche, die bei einem ellipsenförmigen Filterschlauch zur Verfügung steht, kann eine höhere Filterleistung erzielt werden.

Die Außenseiten der Ringelemente können eine Ellipse mit einer großen Halbachse von 7 bis 11 cm, bevorzugt von 9 cm, und mit einer kleinen Halbachse von 4 bis 6 cm, bevorzugt von 5 cm, begrenzen. Hiermit wird ein günstiges Verhältnis zwischen der Filterfläche des auf den Stützkorb aufgezogenen Filterschlauchs und des Innenvolumen des Filterschlauchs erzielt.

Bevorzugt sind die Längsstäbe entlang des Umfangs der Ringelemente gleichmäßig verteilt positioniert. Dies erhöht die Stabilität des Stützkorbs.

Weiterhin können die Längsstäbe an der Außenseite der Ringelemente befestigt sein. Hierdurch gestaltet sich die Fertigung des Stützkorbs einfach.

Gemäß einer Weiterbildung der Erfindung sind die Längsstäbe des Stützkorbs an ihren unteren Endbereichen eingezogen ausgebildet und an einem kleineren Ringelement befestigt, das die gleiche geometrische Form wie die Ringelemente aufweist, wobei das kleinere Ringelement eine kleinere Fläche, bevorzugt eine um 1% bis 10%, besonders bevorzugt eine um 2% bis 4% kleinere Fläche als die Ringelemente aufspannt. Dabei können die unteren Endbereiche der Längsstäbe an der Innenseite des kleineren Ringelements befestigt sein.

Mit anderen Worten ist der Querschnitt des Stützkorbs im unteren Endbereich der Längsstäbe verengt. Hierdurch wird die Möglichkeit geschaffen, den unteren Endbereich des Stützkorbs durch einen Boden zu verschließen, welcher auf den Stützkorb von dessen Unterseite her aufgesetzt wird und die unteren Enden der Längsstäbe und gegebenenfalls zusätzlich das kleinere Ringelement umgreift. Dabei kann das Bodenelement an den Längsstäben und/oder dem kleineren Ringelement befestigt, insbesondere festgeschweißt sein. Durch die eingezogene Ausbildung des Stützkorbs an dessen unteren Endbereich wird gewährleistet, dass das Bodenelement über den äußeren großen Umfang des Stützkorbs nicht nach außen vorsteht und damit eine kompakte Anordnung erhalten wird.

Alternativ ist es möglich, an dem kleineren Ringelement, das insbesondere am äußersten Enden der Längsstäbe befestigt ist, einen Kupplungsring zu halten, der ausgebildet ist, um das kleinere Ringelement eines weiteren Stützkorbes zu umgreifen und so die beiden Stützkörbe aneinander zu fixieren. Dabei kann der Kupplungsring mit einer Sicke versehen sein, die insbesondere im Bereich der quer zu den Längsstäben liegenden Mittelebene des Kupplungsrings verläuft. Derartige Kupplungsanordnungen sind insbesondere aus der DE 10 2005 041 521 B4 und der EP 2 162 291 A1 bekannt, auf die hinsichtlich der Ausbildung des Kupplungsrings ausdrücklich Bezug genommen wird.

Hierbei sind die unteren Endbereiche der Längsstäbe an der Innenseite des kleineren Ringelements befestigt.

Der Stützkorb kann in Abhängigkeit von der geometrischen Größe eine unterschiedliche Anzahl von Längsstäben aufweisen. Zweckmäßigerweise sind 10 bis 20 Längsstäbe, insbesondere 12 oder 18 Längsstäbe, vorgesehen. Ebenso ist es möglich, zur Erhöhung der Stabilität an der Anströmseite und/oder der Abströmseite des Stützkorbs jeweils zwei Längsstäbe unmittelbar benachbart unter Bildung einer Doppelstrebenanorndung vorzusehen.

Gemäß einer weiteren Ausgestaltung der vorliegenden Erfindung ist dem Stützkorb im axial oberen Endbereich der Längsstäbe eine Venturidüse zugeordnet, die ein Rohrstück, das auf seinem oberen Ende ein Kopfblech trägt, aufweist. Dabei definieren das Rohrstück und das Kopfblech eine ellipsenförmige Durchtrittsöffnung. Hierbei ist die Durchtrittsfläche des Rohrstücks kleiner als eine von den Ringelementen aufgespannte Durchtrittsfläche. Durch diese Verengung werden der durchtretende Gasstrom der Abreinigungsdruckluft sowie der Sekundärluft zentriert und beschleunigt.

Dabei kann die Durchtrittsfläche des Rohrstücks um 10 bis 40%, insbesondere um 20 bis 30% kleiner als die von den Ringelementen aufgespannte Durchtrittsfläche sein.

Die Venturidüse kann unmittelbar an dem oberen Ende des Stützkorbs befestigt sein. Zweckmäßigerweise sind dann die oberen Enden der Längsstäbe mit dem Kopfblech verbunden, beispielsweise verschweißt. Alternativ ist es möglich, die oberen Enden der Längsstäbe mittels einer Steckverbindung mit dem Kopfblech zu verbinden. In diesem Fall weist das Kopfblech bevorzugt um die ellipsenförmige Durchtrittsöffnung herum mehrere Durchlassöffnungen auf, wobei mehrere Längsstäbe jeweils eine korrespondierende Durchlassöffnung des Kopfblechs durchgreifen und die aus der Durchlassöffnung hinaustretenden Enden der Längsstäbe zur Befestigung gebogen sind. Auf diese Weise wird eine einfache und stabile Befestigung der Venturidüse an dem Stützkorb ermöglicht.

Zweckmäßigerweise umfasst der Filterschlauch am seinem oberen Endbereich einen Schnappring, der in Form eines offenen Rings ausgebildet ist und insbesondere in den Filterschlauch eingenäht ist. Dies ermöglicht das werkzeuglose Anbringen des Filterschlauchs in eine Öffnung der Lochplatte. Zudem wird hierdurch eine Abdichtung des Filterschlauchs in der Lochplatte erzielt.

In üblicher Weise weist der Schnappring Federstahl auf oder besteht daraus. Derartige Schnappringe weisen eine hohe Widerstandfähigkeit und lange Lebensdauer auf.

Ferner können an der Außenfläche des Schnapprings zwei Halteringe angeordnet sein, die unter Bildung von Haltewülsten in den Filterschlauch eingenäht sind und den Filterschlauch entlang seines gesamten Umfangs umschließen, wobei zwischen den Haltewülsten eine Aufnahme für einen an eine Öffnung einer Lochplatte angrenzenden Randbereich der Lochplatte definiert ist. Hierdurch wird das obere Ende des Filterschlauchs in der Öffnung der Lochplatte gehalten. Ein einziger Haltering, der an der Außenfläche des Schnapprings angeordnet und unter Bildung eines Haltewulstes in den Filterschlauch eingenäht ist, kann jedoch auch ausreichend sein.

Bevorzugt weist dabei zumindest ein Haltering einen halbkreisförmigen Querschnitt auf, dessen gerade Seite dem Schnappring zugewandt ist. Ebenso kann zumindest ein Haltering einen kreisförmigen Querschnitt aufweisen.

Grundsätzlich gibt es unterschiedliche Möglichkeiten, Haltewülste auszugestalten, die prinzipiell alle eingesetzt werden können.

Zweckmäßigerweise umfassen die Halteringe ein Elastomer oder bestehen daraus. Dieses Material ist aufgrund seiner elastischen Verformbarkeit besonders gut geeignet.

Zudem kann die Filterschlauchanordnung die Lochplatte, die die Filterschlauchanordnung in ihrer Längsrichtung in eine obere Reingasseite und eine untere Rohgasseite unterteilt, umfassen. Hierbei ist der Filterschlauch in einer Öffnung der Lochplatte angeordnet. Auf diese Weise wird es ermöglicht, mehrere Filterschläuche mittels einer Lochplatte zu halten.

Weitere Merkmale und Vorteile der vorliegenden Erfindung werden anhand der nachfolgenden Beschreibung einer Ausführungsform einer erfindungsgemäßen Stützkorb- und Filterschlauchanordnung unter Bezugnahme auf die Zeichnung deutlich. Darin zeigt:
- Figur 1: eine schematische Vorderansicht einer Filterschlauchanordnung gemäß einer ersten Ausführungsform der vorliegenden Erfindung,
- Figur 2: die Filterschlauchanordnung aus Figur 1 in Draufsicht,
- Figur 3: eine perspektivische Ansicht der Filterschlauchanordnung aus Figur 3, wobei der Filterschlauch im teilweise montierten Zustand dargestellt ist,
- Figur 4: eine schematische Vorderansicht der Filterschlauchanordnung aus Figur 1, wobei durch die nicht dargestellte Vorderseite des Filterschlauchs der Innenraum des Filterschlauchs sichtbar ist,
- Figur 5: eine schematische Querschnittsansicht des oberen Endbereichs des Filterschlauchs und einer Lochplatte der Filterschlauchanordnung aus Figur 1,
- Figur 6: die Filterschlauchanordnung aus Figur 5 in Draufsicht,
- Figur 7: eine schematische Vorderansicht der Filterschlauchanordnung aus Figur 5,
- Figur 8: eine schematische Seitenansicht der Filterschlauchanordnung aus Figur 5,
- Figur 9: eine schematische Querschnittsansicht des unteren Endbereichs des Filterschlauchs aus Figur 5.
- Figur 10: eine perspektivische Ansicht einer Stützkorbanordnung der Filterschlauchanordnung auf Figur 1,
- Figur 11: die Stützkorbanordnung aus Figur 10 in Draufsicht,
- Figur 12: in Draufsicht ein Stützkorb der Stützkorbanordnung aus Figur 10,
- Figur 13: eine schematische Vorderansicht der Stützkorbanordnung aus Figur 10,
- Figur 14: eine schematische Seitenansicht der Stützkorbanordnung aus Figur 10,

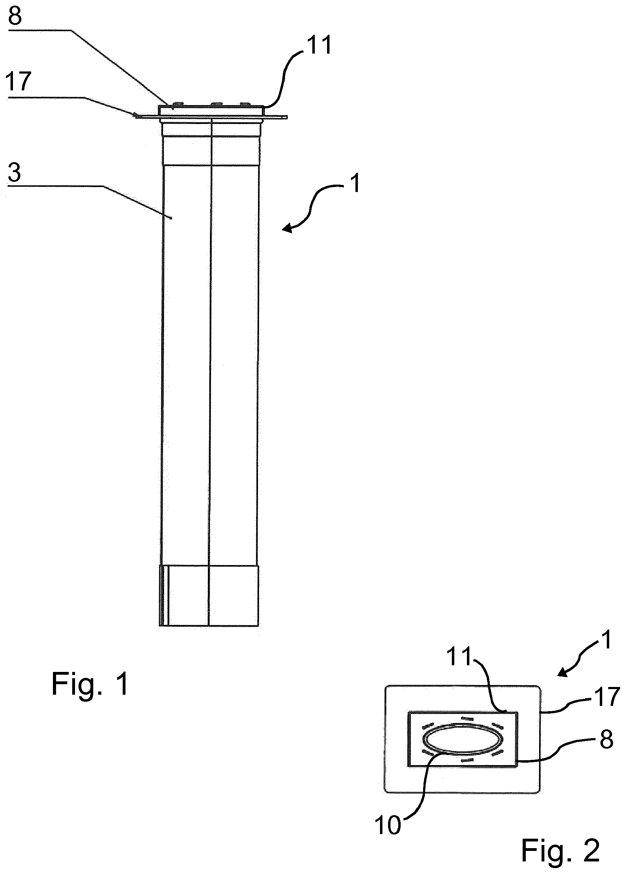

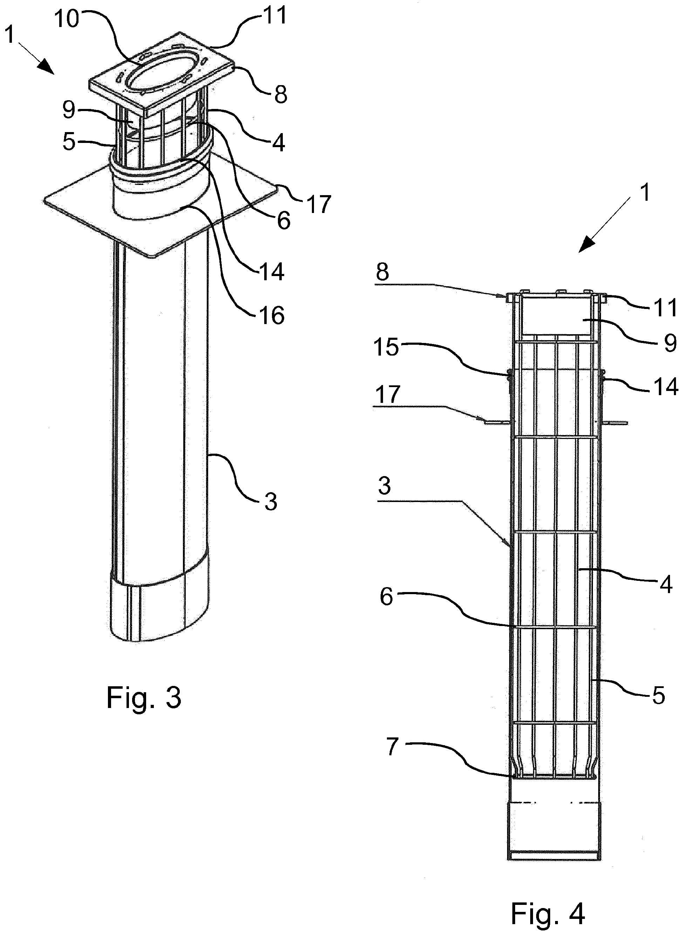

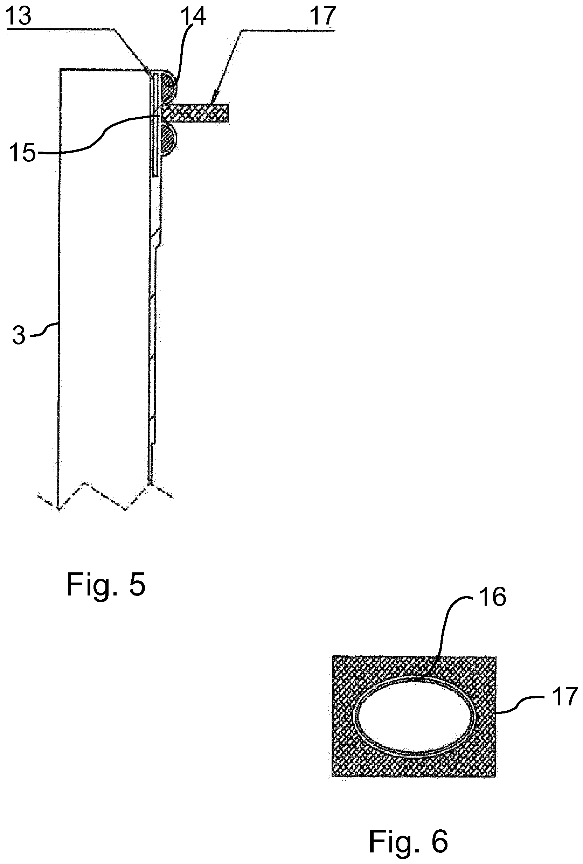

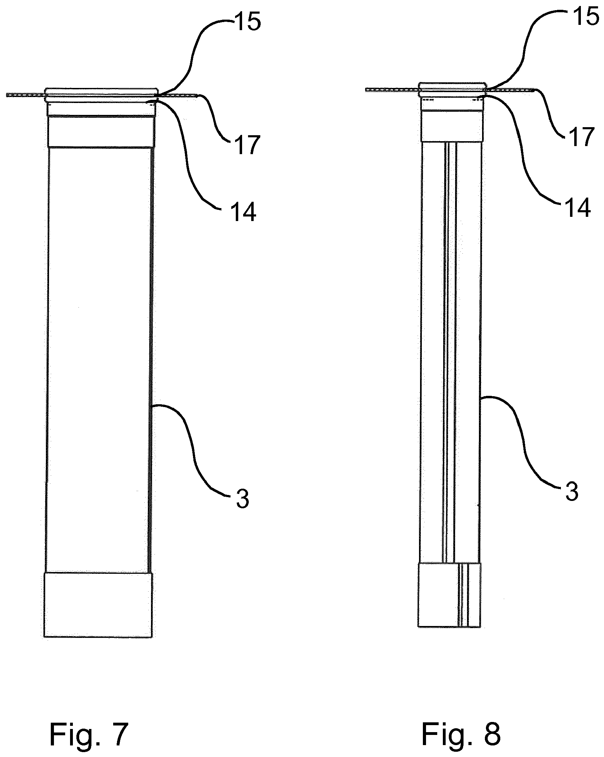

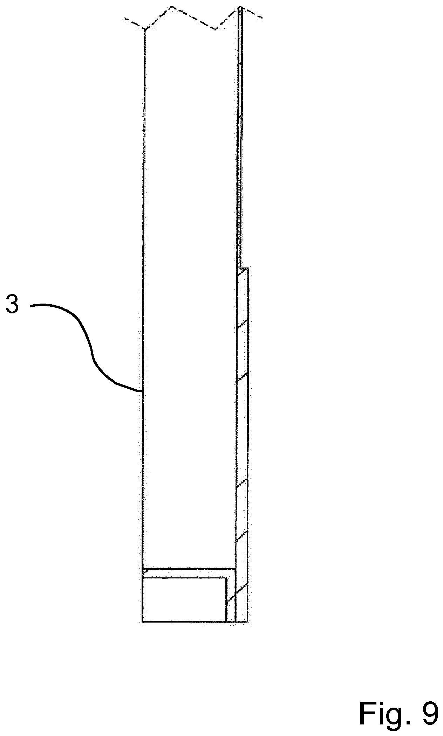

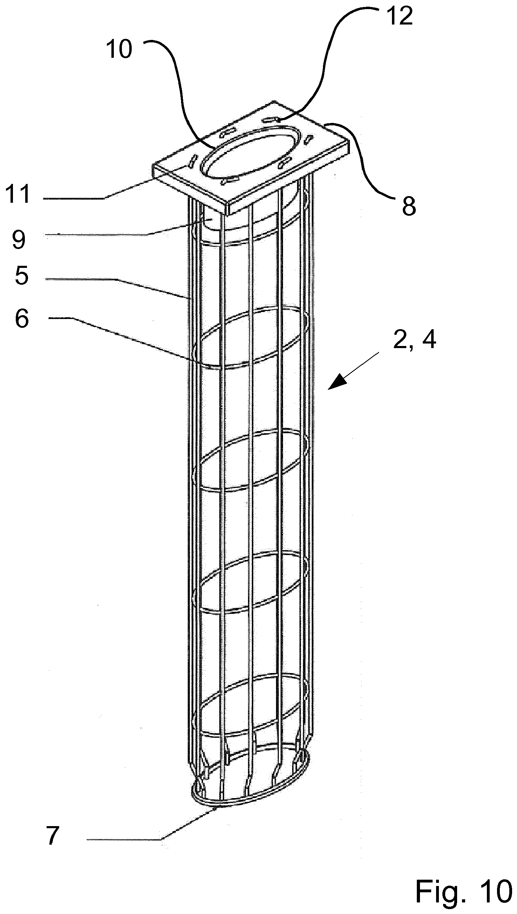

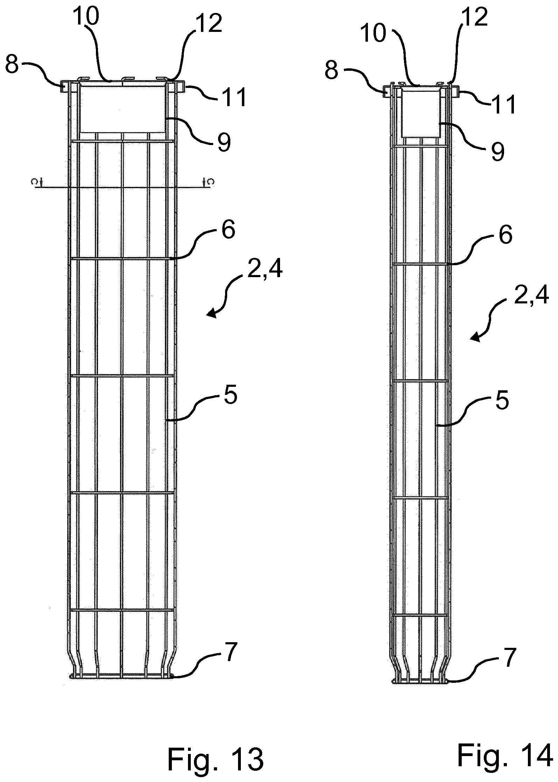

Die Figuren 1 bis 9 zeigen eine Filterschlauchanordnung 1 gemäß einer ersten Ausführungsform der vorliegenden Erfindung. Diese umfasst eine Stützkorbanordnung 2, die in den Figuren 10 bis 14 dargestellt ist, und einen Filterschlauch 3.

Die Stützkorbanordnung 2 umfasst einen Stützkorb 4 mit zwölf Längsstäben 5 und fünf Ringelementen 6. Die Ringelemente 6 sind gleichartig ausgebildet und in der Längsrichtung der Längsstäbe 5 übereinanderliegend mit Abstand zueinander angeordnet. Die Außenseiten der Ringelemente 6 begrenzen eine ellipsenförmige Fläche ohne gerade Abschnitte mit einer großen Halbachse von 9 cm und einer kleinen Halbachse von 5 cm.

Die Längsstäbe 5 sind entlang des Umfangs der Ringelemente 6 gleichmäßig verteilt positioniert und an deren Außenseite befestigt. Die unteren Endbereiche der Längsstäbe 5 sind eingezogen und an der Innenseite eines kleineren Ringelements 7 befestigt, das die gleiche geometrische Form wie die Ringelemente 6 aufweist und eine im Vergleich zu diesen um 4 % kleinere Fläche aufspannt. Mit anderen Worten ist der Querschnitt des Stützkorbs 4 im unteren Bereich der Längsstäbe 5 verengt. Hierdurch wird die Möglichkeit geschaffen, auf den unteren Endbereich des Stützkorbs 4 einen nicht dargestellten Boden aufzusetzen, um den Stützkorb an der Unterseite zu verschließen. Dabei kann das Bodenelement an den Längsstäben 5 und/oder den kleineren Ringelement 7 befestigt, insbesondere festgeschweißt werden. Durch die eingezogene Ausbildung des Stützkorbes an dessen unteren Endbereich wird gewährleistet, dass das Bodenelement über den äußeren großen Umfang des Stützkorbs nicht nach außen vorsteht.

Alternativ ist es möglich, an dem kleineren Ringelement 7, das an dem äußersten Ende der Längsstäbe 5 befestigt ist, einen Kupplungsring anzubringen, der ausgebildet ist, um das kleinere Ringelement 7 eines weiteren Stützkorbes 4 zu umgreifen und so die beiden Stützkörbe 4 mit ihren Unterseiten zueinander weisend aneinander zu fixieren. Durch die eingezogenen unteren Endbereiche der Längsstäbe 5 wird auch hier der Platz für einen entsprechenden Kupplungsring zur Verfügung gestellt.

Zudem ist dem Stützkorb 4 eine Venturidüse 8 zugeordnet. Diese weist ein ellipsenförmiges Rohrstück 9 auf, das an seinem oberen Ende ein Kopfblech 11 trägt. Dabei definieren das Rohrstück 9 und das Kopfblech 11 eine ellipsenförmige Durchtrittsöffnung 10, die um 20 % kleiner als die von den Ringelementen 6 aufgespannte Durchtrittsfläche ist. Die Venturidüse 8 ist an dem oberen Ende des Stützkorbs 4 mittels einer Steckverbindung befestigt. Hierzu weist das Kopfblech 11 um die ellipsenförmige Durchtrittsöffnung 10 herum verteilt sechs Durchlassöffnungen 12 auf, die jeweils von einem zugeordneten Längsstab 5 durchgriffen werden, wobei deren aus der Durchlassöffnung 12 hinaustretenden Enden zu dem Kopfblech 11 umgebogen sind. Alternativ können die Längsstäbe 5 an dem Kopfblech 11 festgeschweißt werden.

Der Filterschlauch 3 ist auf den Stützkorb 4 der Stützkorbanordnung 2 aufgezogen und erstreckt sich über dessen gesamte Länge, so dass der Filterschlauch 3 über den unteren Endbereich des Stützkorbs 4 hinausragt. An seinem oberen Endbereich umfasst der Filterschlauch 3 einen Schnappring 13 aus Metall über welchen der Filterschlauch 3 an dem Stützkorb 4 klemmend fixiert ist. Der Schnappring 13 ist in Form eines offenen, nach außen spannbaren Rings ausgebildet und in den Filterschlauch 3 eingenäht. Der Filterschlauch 3 ist an seinem unteren Endbereich geschlossen ausgebildet.

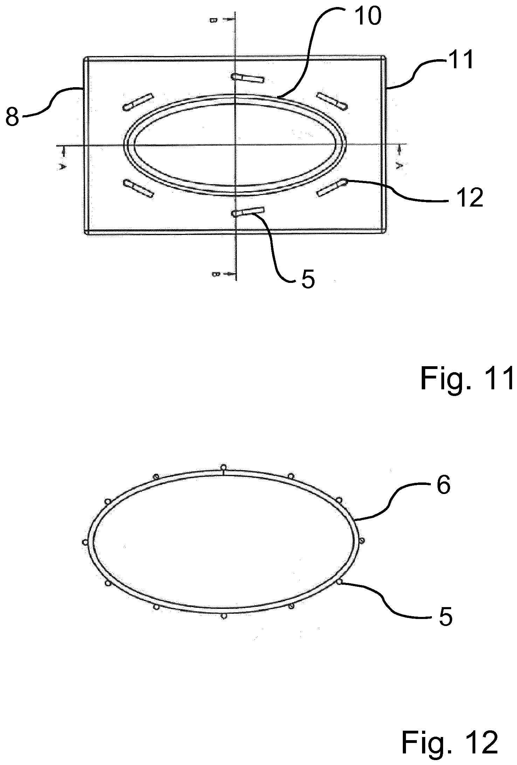

Wie in Figur 11 dargestellt ist, sind an der Außenseite des in den Filterschlauch 3 eingenähten Schnapprings 13 zwei Halteringe 14 aus Elastomer angeordnet, die unter Bildung von Haltewülsten 14 in den Filterschlauch 3 eingenäht sind und den Filterschlauch 3 entlang seines gesamten Umfangs umschließen. Hierdurch ist zwischen den Haltewülsten 14 eine Aufnahme 15 für einen an eine Öffnung 16 einer Lochplatte 17 angrenzenden Randbereich der Lochplatte 17 definiert. Die Halteringe 14 weisen einen halbkreisförmigen Querschnitt auf, dessen gerade Seite dem Schnappring 13 zugewandt ist. Alternativ ist es möglich, nur einen Haltering vorzusehen, über welchen dann der Filterschlauch 3 in nur einer Richtung an der Lochplatte 17 gesichert wird. Ebenso ist es möglich, Halteringe 14 mit einem anderen Querschnitt, insbesondere einem kreisförmigen Querschnitt zu verwenden.

Zudem umfasst die Filterschlauchanordnung 1 die Lochplatte 17, die die Filterschlauchanordnung 1 in ihrer Längsrichtung funktional in eine obere Reingasseite und eine untere Rohgasseite unterteilt. Hierbei ist der Filterschlauch 3 in der Öffnung 16 der Lochplatte 17 angeordnet.

## Patentansprüche

1. Stützkorbanordnung, umfassend zumindest einen Stützkorb (4), welcher eine Mehrzahl von Längsstäben (5) und mehrere gleichartig ausgebildete, übereinanderliegende Ringelemente (6) aufweist, die in der Längsrichtung der Längsstäbe (5) voneinander beabstandet sind, wobei die Längsstäbe (5) entlang des Umfangs der Ringelemente (6) positioniert und an diesen befestigt sind, **dadurch gekennzeichnet, dass** die Außenseiten der Ringelemente (6) des Stützkorbs (4) jeweils eine rein elliptische Fläche, insbesondere ohne gerade Abschnitte, aufspannen.

2. Stützkorbanordnung nach Anspruch 1, **dadurch gekennzeichnet, dass** die Außenseiten der Ringelemente (6) eine Ellipse mit einer großen Halbachse von 7 bis 11 cm, bevorzugt von 9 cm, begrenzen und/oder dass die Außenseiten der Ringelemente (6) eine Ellipse mit einer kleinen Halbachse von 4 bis 6 cm, bevorzugt von 5 cm, begrenzen.

3. Stützkorbanordnung nach einem der vorhergehenden Ansprüche, **dadurch gekennzeichnet, dass** die Längsstäbe (5) entlang des Umfangs der Ringelemente (6) gleichmäßig verteilt positioniert sind und/oder dass die Längsstäbe (5) an der Außenseite der Ringelemente (6) befestigt sind.

4. Stützkorbanordnung nach einem der vorhergehenden Ansprüche, **dadurch gekennzeichnet, dass** die Längsstäbe (5) des Stützkorbs (4) an ihren unteren Endbereichen eingezogen ausgebildet und an einem kleineren Ringelement (7) befestigt sind, das die gleiche geometrische Form wie die Ringelemente (6) aufweist, wobei das kleinere Ringelement (7) eine kleinere Fläche, bevorzugt eine um 1 % bis 10 %, besonders bevorzugt eine um 2 % bis 4 %, kleinere Fläche, als die Ringelemente (6) aufspannt und insbesondere die unteren Endbereiche der Längsstäbe (5) an der Innenseite des kleineren Ringelements (7) befestigt sind.

5. Stützkorbanordnung nach Anspruch 4, **dadurch gekennzeichnet, dass** der untere Endbereich des Stützkorbs (4) durch einen Boden verschlossen ist, welcher auf den Stützkorb (4) von dessen Unterseite her aufgesetzt ist und die unteren Enden der Längsstäbe (5) und gegebenenfalls zusätzlich das kleinere Ringelement (7) umgreift, wobei insbesondere das Bodenelement an den Längsstäben (5) und/oder dem kleineren Ringelement (7) befestigt, insbesondere festgeschweißt ist.

6. Stützkorbanordnung nach Anspruch 4, **dadurch gekennzeichnet, dass** an dem kleineren Ringelement (7), das insbesondere am äußersten Ende der Längsstäbe (5) befestigt ist, ein Kupplungsring gehalten ist, der ausgebildet ist, um das kleinere Ringelement (7) eines weiteren Stützkorbes zu umgreifen und so die beiden Stützkörbe aneinander zu fixieren, wobei insbesondere der Kupplungsring mit einer Sicke versehen ist, die bevorzugt im Bereich der quer zu den Längsstäben liegenden Mittelebene des Kupplungsrings verläuft.

7. Stützkorbanordnung nach einem der vorhergehenden Ansprüche, **dadurch gekennzeichnet, dass** der Stützkorb (4) 10 bis 20 Längsstäbe (5), bevorzugt 12 oder 18 Längsstäbe (5), umfasst, und/oder dass an der Anströmseite und/oder der Abströmseite des Stützkorb (4) jeweils zwei Längsstäbe (5) unmittelbar benachbart unter Bildung einer Doppelstrebenanorndung vorgesehen sind.

8. Stützkorbanordnung nach einem der vorhergehenden Ansprüche, **dadurch gekennzeichnet, dass** dem Stützkorb (4) im axial oberen Endbereich der Längsstäbe (5) eine Venturidüse (8) zugeordnet ist, die ein ellipsenförmiges Rohrstück (9), das an seinem oberen Ende ein Kopfblech (11) trägt, aufweist, wobei das Rohrstück (9) und das Kopfblech (11) eine ellipsenförmige Durchtrittsöffnung (10) definieren und die Durchtrittsfläche des Rohrstücks (9) kleiner als eine von den Ringelementen (6) aufgespannte Durchtrittsfläche ist, wobei bevorzugt die Durchtrittsfläche des Rohrstücks (9) um 10 % bis 40 %, insbesondere um 20 % bis 30 % kleiner als die von den Ringelementen (6) aufgespannte Durchtrittsfläche ist.

9. Stützkorbanordnung nach Anspruch 8, **dadurch gekennzeichnet, dass** die Venturidüse (8) an dem oberen Ende des Stützkorbs (4) befestigt ist.

10. Stützkörperanordnung nach Anspruch 9, **dadurch gekennzeichnet, dass** die oberen Enden der Längsstäbe (5) mit dem Kopfblech (11) verschweißt sind.

11. Stützkörperanordnung nach Anspruch 9, **dadurch gekennzeichnet, dass** die oberen Enden der Längsstäbe (5) mittels einer Steckverbindung mit dem Kopfblech (11) verbunden sind, wobei insbesondere das Kopfblech (11) um die ellipsenförmige Durchtrittsöffnung (10) herum mehrere Durchlassöffnungen (12) aufweist, wobei mehrere Längsstäbe (5) jeweils eine korrespondierende Durchlassöffnung (12) des Kopfblechs (11) durchgreifen und deren aus der Durchlassöffnung (12) hinaustretende Enden zur Befestigung gebogen sind.

12. Filterschlauchanordnung umfassend eine Stützkorbanordnung (2) gemäß einem der vorhergehenden Ansprüche und zumindest einen Filterschlauch (3), der auf den Stützkorb (4) der Stützkorbanordnung (2) aufgezogen ist, wobei insbesondere der Filterschlauch (3) an seinem oberen Endbereich einen Schnappring (13), der bevorzugt Federstahl aufweist oder daraus besteht umfasst, der in Form eines offenen Ringes ausgebildet ist und insbesondere in den Filterschlauch (3) eingenäht ist.

13. Filterschlauchanordnung nach Anspruch 12, **dadurch gekennzeichnet, dass** an der Außenfläche des Schnapprings (13) zwei Halteringe (14) angeordnet sind, die unter Bildung von Haltewülsten (14) in den Filterschlauch (3) eingenäht sind und den Filterschlauch (3) entlang seines gesamten Umfangs umschließen, wobei zwischen den Haltewülsten (14) eine Aufnahme (15) für einen an eine Öffnung (16) einer Lochplatte (17) angrenzenden Randbereich der Lochplatte (17) definiert ist, oder dass an der Außenfläche des Schnapprings (13) ein Haltering angeordnet ist, der unter Bildung eines Haltewulstes in den Filterschlauch eingenäht ist und den Filterschlauch entlang seines gesamtes Umfangs umschließt.

14. Filterschlauchanordnung nach Anspruch 12, **dadurch gekennzeichnet, dass** zumindest ein Haltering (14) einen halbkreisförmigen Querschnitt aufweist, dessen gerade Seite dem Schnappring (13) zugewandt ist und/oder dass zumindest ein Haltering (14) einen kreisförmigen Querschnitt aufweist und/oder dass wenigstens ein Haltering (14) ein Elastomer umfasst oder daraus besteht.

15. Filterschlauchanordnung nach Anspruch 13 oder 14, **dadurch gekennzeichnet, dass** die Filterschlauchanordnung (1) zudem eine Lochplatte (17), die die Filterschlauchanordnung (1) in ihrer Längsrichtung in eine obere Reingasseite und eine untere Rohgasseite unterteilt, umfasst, wobei der Filterschlauch (3) in der Öffnung (16) der Lochplatte (17) angeordnet ist.
